Europäisches Patentamt

European Patent Office

Office européen des brevets

(11) Publication number: **0 313 822**
**A1**

## (12) EUROPEAN PATENT APPLICATION

(21) Application number: **88115661.6**

(22) Date of filing: **23.09.88**

(51) Int. Cl.4: **C08L 67/06**

(30) Priority: **30.09.87 IT 6782987**

(43) Date of publication of application:
**03.05.89 Bulletin 89/18**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Da Re', Mario**
**Via C. Colombo, 9**
**I-10128 Torino(IT)**

(74) Representative: **Notaro, Giancarlo et al**
**c/o Jacobacci-Casetta & Perani S.p.A. Via**
**Alfieri, 17**
**I-10121 Torino(IT)**

(54) Composite material for the moulding of fibre-reinforced unsaturated polyester resin.

(57) The addition of elastomeric thermoplastic polymers and melamine resin to the polymer matrix of composite materials for the moulding of fibre-reinforced unsaturated polyester resin improves the surface characteristics, resilience, mouldability and heat resistance thereof.

EP 0 313 822 A1

## Composite material for the moulding of fibre-reinforced unsaturated polyester resin

The present invention relates to composite moulding materials with a fibre-reinforced unsaturated polyester resin base.

The use of moulding materials of the reinforced unsaturated polyester type, such as SMC, BMC and the like, is often associated with problems of weakness due to the nature of the material. Moreover, another problem, typical of this type of material is the production of surface microfractures under flexing loads. In order to overcome these problems, the subject of the present invention is a composite material for the moulding of fibre-reinforced unsaturated polyester resin, characterised in that it includes elastomeric thermoplastic polymers and melamine resin in the polymer matrix.

The elastomeric thermoplastic material is preferably selected from the group consisting of elastomeric thermoplastic polyesters, such as polybutylenterephtalate (e.g. Hytrel (registered trademark) by Du Pont or Arnitel (registered trademark) AKZO) elastomeric thermoplastic polyurethanes (e. g. Desmopan (registered trademark) by Bayer) and thermoplastic rubbers, such as PP-EPDM (e.g. KRATON (registered trademark) by Shell).

For the melamine resin, the already catalysed product can conveniently be used.

The composite material according to the invention may further include polybutyleneterephthalate and polyethyleneterephthalate crystalline thermoplastic materials. The elastomeric thermoplastic material is incorporated, in the form of impalpable powder or in solvents, into the polymer matrix during the formulation stage of the composite material, which is effected by conventional techniques. The concentration of the thermoplastic polymer in the polymer matrix may vary within a wide range of dependence on the specific polymer in question, selected from the above-mentioned group. Amounts ranging from 5 to 10% wt referred to the moldine compound are preferred. The melamine resin may typically be incorporated in a proportion from 5 to 20% by weight relative to the weight of the composite material.

The addition of the above-mentioned components to the composite material has a positive effect, particularly with reference to the following factors:
- improvement in surface appearance
- increase in breaking extension
- elimination of surface cracks due to flexing,
- reduction in surface porosity,
- increase in impact strength,
- improvement in mouldability,
- increase in resistance to heat,
- reduction in deformation under load, and
- improvement in ability to be pigmented.

It should be remembered that the elastomeric nature of the thermoplastic used interacts with the thermosetting characteristics of the composite material, thereby reducing its modulus of elasticity. The melamine partially compensates for this action and, furthermore, becomes disposed at the surface, improving its reflectivity.

Another positive aspect is the increase in surface "slippability" which facilitates removal from the dies, reducing the risk of local fractures.

The composite material according to the invention is suitable for moulding by injection or compression moulding and is particularly suitable for the production of structural elements obtainable by the sandwich moulding method which is the subject of a patent application filed on the same date by the Applicant and entitled: "Method for the production of structural elements of plastics material, particularly component parts of motor vehicle bodies by injection moulding".

## Claims

1. A composite moulding material with a fibrereinforced unsaturated polyester resin base, characterised in that it includes an elastomeric thermoplastic polymer and melamine resin in the polymer matrix.

2. A composite material according to Claim 1, characterised in that the elastomeric thermoplastic material is selected from the group consisting of elastomeric thermoplastic polyesters, elastomeric thermoplastic polyurethanes and thermoplastic rubbers.

3. A composite material according to Claim 1 wherein the melamine resin is present in the amount of from 5 to 20% wt referred to the composite material.

4. A composite material according to Claim 2 wherein the elastomeric material is present in the amount of to 10% wt referred to the composite material.

5. A composite material according to Claim 1 or Claim 2, characterised in that it also includes crystalline thermoplastic polyesters in the polymer matrix.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 927 935 (HOUILIERES DU BASSIN DU NORD ET DU PAS-DE-CALAIS) --- | | C 08 L 67/06 |
| A | FR-A-2 029 845 (L. RECHNER) --- | | |
| A | US-A-4 520 161 (D.R. SASSANO) ------ | | |

TECHNICAL FIELDS SEARCHED (Int. Cl.4)

C 08 L

The present search report has been drawn up for all claims

| Place of search | Date of completion of the search | Examiner |
|---|---|---|
| THE HAGUE | 13-02-1989 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)